# EUROPÄISCHE PATENTSCHRIFT

(11) **EP 4 382 745 B1**
(45) Veröffentlichungstag und Bekanntmachung des Hinweises auf die Patenterteilung: **30.07.2025**
(21) Anmeldenummer: 22212206.1
(22) Anmeldetag: 08.12.2022
(51) Int. Cl.: F03D 80/60

(54) **WINDENERGIEANLAGE UND VERFAHREN ZUM STEUERN EINER WINDENERGIEANLAGE**
WIND TURBINE AND METHOD FOR CONTROLLING A WIND TURBINE
ÉOLIENNE ET PROCÉDÉ DE COMMANDE D'UNE ÉOLIENNE

(43) Veröffentlichungstag der Anmeldung: 12.06.2024
(73) Patentinhaber: Wobben Properties GmbH, 26607 Aurich (DE)
(72) Erfinder: Arnold, Matthias, 26603 Aurich (DE); Busemann, Steffen, 26842 Ostrhauderfehn (DE); Daboul, Hussam, 26624 Südbrookmerland (DE)
(74) Vertreter: Eisenführ Speiser

(56) Entgegenhaltungen:
- EP-A2- 2 218 909
- DE-A1- 102007 016 577

## Beschreibung

Die vorliegende Erfindung betrifft eine Windenergieanlage sowie ein Verfahren zum Steuern einer Windenergieanlage.

Eine Windenergieanlage weist typischerweise einen Turm und eine Gondel auf dem Turm auf. In der Gondel ist der elektrische Generator als eine Wärmequelle sowie weitere Wärmequellen in Form von Leistungselektronikeinheiten vorgesehen. Insbesondere bei der Umwandlung der durch den Generator erzeugten Spannung erzeugen die Leistungselektronikeinheiten bei ihrem Betrieb Wärmeverluste. Je nach Auslegung der Windenergieanlage und des Generators müssen die Wärmequellen in der Gondel aktiv oder passiv gekühlt werden. Als aktive Kühlung kommt eine aktive Luftkühlung oder eine aktive Flüssigkeitskühlung in Frage.

DE 10 2007 016 577 A1 zeigt eine Windenergieanlage mit einem Turm, einer Gondel und einer Kühleinheit zur Kühlung eines Akkumulators.

EP 2 218 909 A2 zeigt eine Windenergieanlage mit einer Gondel und einem Turm mit temperaturabhängig verschließbaren Lüftungsöffnungen zur Erzielung eines Kühl- oder Kamineffektes.

Es ist eine Aufgabe der vorliegenden Erfindung, eine Windenergieanlage sowie ein Verfahren zum Steuern einer Windenergieanlage vorzusehen, welches eine verbesserte Kühlung der Windenergieanlage ermöglicht.

Diese Aufgabe wird durch eine Windenergieanlage nach Anspruch 1 sowie durch ein Verfahren zum Steuern einer Windenergieanlage nach Anspruch **8** gelöst.

Somit wird eine Windenergieanlage mit einem Turm und einer Gondel mit einem Gondelgehäuse vorgesehen. Die Gondel ist auf dem Turm platziert. Ferner ist eine Kühlklappe vorgesehen, welche dazu ausgestaltet ist, eine Öffnung in oder an dem zu kühlenden Bereich der Windenergieanlage zu verschließen. Mindestens ein temperaturabhängiger passiver Aktor ist dazu ausgestaltet, temperaturabhängig die Kühlklappe zu betätigen und zu öffnen, um einen Wärmeausgleich in dem zu kühlenden Bereich mittels der Öffnung zu ermöglichen. Der temperaturabhängige passive Aktor kann ohne externe elektrische Energie in Abhängigkeit der Temperatur seine Form und/oder seine Länge ändern.

Es wird ein (zu kühlender) Bereich der Windenergieanlage vorgesehen, der eine Öffnung aufweist, welche durch eine Kühlklappe verschließbar ist. Alternativ dazu kann die Öffnung zwischen zwei Bereichen der Windenergieanlage vorgesehen sein, welche eine unterschiedliche Wärmeentwicklung aufweisen. Die Kühlklappe kann durch einen temperaturabhängigen passiven Aktor geöffnet werden. Die Öffnung kann an einer Außenwand oder Außenseite der Windenergieanlage vorgesehen sein.

Es wird somit eine Windenergieanlage mit einem Turm und einem zu kühlenden Bereich vorgesehen. Der zu kühlende Bereich kann eine Gondel, einen Turm, eine Nabe und/oder eine andere Struktur der Windenergieanlage darstellen. In der Gondel können mehrere Wärmequellen wie beispielsweise der Generator sowie Leistungselektronikeinheiten vorhanden sein.

Gemäß einem Aspekt der Erfindung weist die Gondel ein Gondelgehäuse mit mindestens einer verschließbaren Öffnung bzw. einer zu öffnenden Kühlklappe auf. Diese Öffnung dient als Kühlöffnung. Durch Öffnen der Öffnung kann Wärme in dem Gondelgehäuse abgeleitet werden. Die Öffnung bzw. die Kühlklappe wird durch einen temperaturabhängigen passiven Aktuator bei Erreichen einer Grenztemperatur betätigt. Damit kann Wärme, welche innerhalb des Gondelgehäuses erzeugt worden ist, durch die Öffnung zumindest teilweise entweichen. Somit wird eine passiv aktuierbare Möglichkeit der Kühlung des Generators sowie der Leistungselektronikeinheiten innerhalb des Gondelgehäuses ermöglicht.

Dadurch, dass der Aktuator temperaturabhängig und passiv ist, kann er auch dann die Kühlklappe oder die Öffnung öffnen, wenn die Windenergieanlage nicht an das Energieversorgungsnetz angeschlossen ist und/oder wenn durch einen Betriebszustand der Windenergieanlage keine oder nicht ausreichend Energie zur aktiven Kühlung aus dem Energieversorgungsnetz entnommen werden kann. Dies kann insbesondere bei einem Netzfehler der Fall sein, so dass die Windenergieanlage keine Leistung in das Energieversorgungsnetz, an welches es angeschlossen ist, abgeben kann. Ferner kann es dazu kommen, dass die Windenergieanlage aufgrund der Trägheit des aerodynamischen Rotors, der mit dem Generator gekoppelt ist, Energie erzeugt. Diese Energie kann beispielsweise mittels eines Choppers in Wärme umgewandelt werden.

Es wird ein Verfahren zum Steuern einer Windenergieanlage vorgesehen. Die Windenergieanlage weist einen zu kühlenden Bereich (z. B. eine Gondel, einen Turm, eine Nabe und/oder eine andere Struktur mit mindestens einer Wärmequelle) auf. Die Wärmequelle kann einen Generator oder eine Leistungselektronikeinheit innerhalb der Gondel darstellen. Diese oder eine andere Wärmequelle, insbesondere ein Chopper, wird nur dann aktiviert, wenn im Netz ein Fehler vorhanden ist (Fehlerbetriebsart), so dass die Windenergieanlage keine Energie in das Energieversorgungsnetz abgeben kann. Die Gondel weist ein Gondelgehäuse mit mindestens einer Öffnung auf, welche durch eine Kühlklappe verschließbar ist. Zum Öffnen der Kühlklappe ist ein temperaturabhängiger passiver Aktor vorgesehen. Bei Erreichen einer bestimmten Grenztemperatur innerhalb der Gondel oder an bestimmten Stellen innerhalb der Gondel kommt es zu einer Aktivierung des passiven Aktors, so dass die Kühlklappe geöffnet wird.

Der temperaturabhängige passive Aktor kann ein Bi-Materialelement mit einem ersten und zweiten Materialabschnitt aufweisen, welche unterschiedliche Wärmeausdehnungskoeffizienten aufweisen. Der Bi-Materialabschnitt kann zwei Kunststoffe, anderen Materialien oder Materialmischungen mit unterschiedlichen Wärmeausdehnungskoeffizienten aufweisen. Alternativ dazu kann der Aktor als ein mit Öl gefüllter Zylinder ausgestaltet sein, wobei bei steigender Temperatur das Öl in dem Zylinder sich ausdehnt, was zu einer Änderung der Abmessung des Zylinders, d. h. einer Längenänderung führt, wodurch die Kühlklappe geöffnet werden kann. Alternativ dazu kann der Akku als Zylinder ausgestaltet sein, der mit einem Material befüllt ist, welches sich unter Wärmeeinfluss ausdehnt (z. B. Öl). Dies führt zu einer Längenausdehnung des Zylinders.

Alternativ dazu kann der temperaturabhängige passive Aktor als ein Schmelzzylinder ausgestaltet sein. In dem Zylinder ist ein Material vorgesehen, welches bei einer Grenztemperatur schmilzt und sich dann ausdehnt, was zu einer Änderung der Geometrie des Schmelzzylinders, d. h. der Länge führt, so dass die Kühlklappe geöffnet werden kann.

Der Aktor, welcher als Bi-Metall Aktor ausgestaltet ist, weist zwei verschweißte Metallabschnitte mit unterschiedlichen Wärmeausdehnungskoeffizienten auf. Der Ölzylinderaktor weist einem mit Öl gefüllten Zylinder auf, wobei sich das Öl bei steigender Temperatur ausdehnt. Der Schmelzzylinderaktor weist einen beispielsweise mit Wachs gefüllten Zylinder auf, wobei sich das Wachs bei steigender Temperatur und beim Schmelzen ausdehnt.

Der temperaturabhängige passive Aktuator ermöglicht somit eine sichere und kurzfristig einsetzbare Möglichkeit einer Kühlung der Wärmequellen in dem Gondelgehäuse, ohne dass hierfür eine Energiezufuhr von außen benötigt wird.

Der passive temperaturabhängige Aktor kann zum Öffnen und Schließen einer Kühlklappe in einem Gondelgehäuse vorgesehen sein. Die Kühlklappe wird temperaturabhängig geändert. Eine Temperaturerhöhung innerhalb der Gondel kann insbesondere in einem Fehlerfall der Windenergieanlage erfolgen. Insbesondere wenn die Windenergieanlage keine Energie an das angeschlossene Energieversorgungsnetz abgeben kann, jedoch weiter Energie erzeugt, muss diese Energie verbraucht werden. Dies erfolgt beispielsweise durch Verwendung eines Choppers, d. h. durch Umwandeln der elektrischen Energie in Wärme. Da der Chopper in dem Gondelgehäuse vorgesehen ist, führt dies zu einer Erhöhung der Temperatur innerhalb des Gondelgehäuses. Um die Temperatur zu begrenzen oder wieder abzusenken, wird der passive temperaturabhängige Aktor verwendet, indem er die Kühlklappe öffnet, so dass Wärme durch die Öffnung in dem Gondelgehäuse entweichen kann. Der passive temperaturabhängige Aktor muss unabhängig von von außen zugeführter elektrischer Energie betreibbar sein, da in dem oben beschriebenen Fehlerfall die Windenergieanlage keine Energie zur Steuerung entsprechender Komponenten aus dem Energieversorgungsnetz entnehmen kann. Daher ist der Aktor als passiver temperaturabhängiger Aktor ausgestaltet. Damit kann erreicht werden, dass der Aktor auch seinen Betrieb sicherstellen kann, wenn keine elektrische Energie zur Steuerung anderer Komponenten vorhanden ist.

Der passive temperaturabhängige Aktor kann auch in bereits bestehenden Gondelgehäusen eingebaut werden. Er kann dazu verwendet werden, eine bestehende Kühlklappe zu öffnen. Alternativ dazu muss in dem Gondelgehäuse ebenfalls eine Öffnung mit einer Kühlklappe vorgesehen werden.

Der passive temperaturabhängige Aktor zum Öffnen der Kühlklappe in dem Gondelgehäuse ist insbesondere dann von Vorteil, wenn ein Chopper, der in Betrieb Wärme erzeugt, in dem Gondelgehäuse vorgesehen ist.

Ein zu kühlender Bereich der Windenergieanlage weist eine Öffnung mit einer Kühlklappe auf, die durch einen temperaturabhängigen passiven Aktor geöffnet werden kann.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage,
- Fig. 2: zeigt eine schematische Darstellung einer Gondel einer Windenergieanlage,
- Fig. 3A: zeigt einen Graphen zur Veranschaulichung der Ausdehnung von verschiedenen passiven Aktoren über die Temperatur,
- Fig. 3B: zeigt verschiedene passive temperaturabhängige Aktoren,
- Fig. 4A: zeigen jeweils einen Ausschnitt einer Gondel einer Windenergie-
- bis 4E: anlage mit verschiedenen passiven temperaturabhängigen Aktoren, und
- Fig. 5: zeigt einen Graphen zur Veranschaulichung einer zeitlichen Abhängigkeit einer Lufttemperatur in der Gondel für verschiedene Ausgestaltungen der Kühlung.

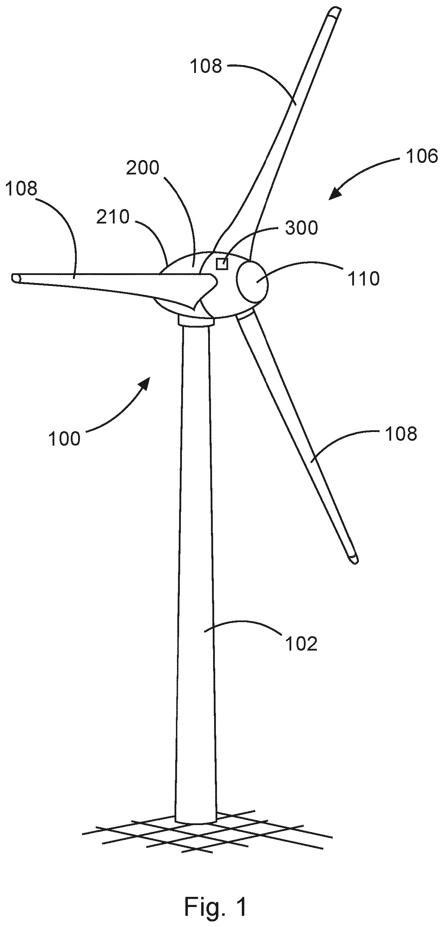

Fig. 1 zeigt eine schematische Darstellung einer Windenergieanlage. Die Windenergieanlage 100 weist einen Turm 102 mit einer Gondel 200 auf dem Turm auf. Die Windenergieanlage weist einen aerodynamischen Rotor 106 mit einem Spinner 110 und drei Rotorblättern 108 auf. Die Gondel 200 weist ein Gondelgehäuse 210 auf. Die Windenergieanlage 100 weist einen elektrischen Generator 300 auf, welcher direkt oder indirekt mit dem aerodynamischen Rotor 106 gekoppelt ist. Bei Rotation des aerodynamischen Rotors 106 wird der Rotor des Generators 300 in Bewegung versetzt, so dass der Generator elektrische Energie erzeugt.

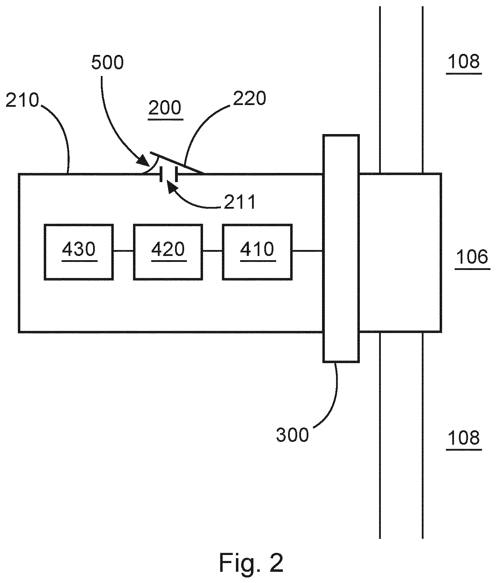

Fig. 2 zeigt eine schematische Darstellung einer Gondel einer Windenergieanlage. Die Gondel 200 weist ein Gondelgehäuse 210 und mindestens eine Öffnung 211 auf, welche durch eine Kühlklappe 220 verschlossen werden kann. Ein elektrischer Generator 300 ist direkt oder indirekt mit einem aerodynamischen Rotor 106 gekoppelt, wobei der Rotor Rotorblätter 108 aufweist. Der elektrische Generator 300 ist mit mehreren Leistungselektronikeinheiten 410, 420, 430 gekoppelt. Diese drei Leistungselektronikeinheiten 410, 420, 430 sind innerhalb des Gondelgehäuses 210 angeordnet. Die Leistungselektronikeinheiten 410, 420, 430 können beispielsweise einen Gleichrichter 410, einen DC-Zwischenkreis 420 und einen Chopper 430 darstellen. Alternativ dazu können auch weitere Leistungselektronikeinheiten in dem Gondelgehäuse 210 angeordnet sein. Eine derartige Leistungselektronikeinheit kann beispielsweise einen Wechselrichter darstellen. Beim Betrieb der Windenergieanlage können der Generator 300 und die Leistungselektronikeinheiten Wärme erzeugen, d. h. sie sind Wärmequellen. Die Gondel kann damit einen zu kühlenden Bereich 200 darstellen.

Die Windenergieanlage 100 kann eine Normalbetriebsart und mindestens eine Fehlerbetriebsart aufweisen.

Beim Betrieb der Windenergieanlage rotiert der aerodynamische Rotor 106 und setzt einen Rotor des Generators 300 in Bewegung. Dadurch erzeugt der elektrische Generator 300 elektrische Energie, welche an die erste Leistungselektronikeinheit 410 beispielsweise zum Gleichrichten ausgegeben wird. Nach der Gleichrichtung durch den Gleichrichter 410 kann ein DC Zwischenkreis 420 vorgesehen sein. Der Chopper 430 kann dazu verwendet werden, durch den Generator erzeugte Energie, welche jedoch nicht an das Energieversorgungsnetz abgegeben werden kann, in Wärme umzuwandeln. Dies kann insbesondere in einem Fehlerfall, d. h. bei einem Netzfehler, erfolgen. Hierbei kann es dazu kommen, dass die Windenergieanlage keine Energie an das Energieversorgungsnetz abgeben darf. Aufgrund der Trägheit des aerodynamischen Rotors 106 kann es jedoch dazu kommen, dass der Generator weiterhin Energie erzeugt. Da diese Energie nicht an das Energieversorgungsnetz abgegeben werden kann, kann diese Energie in einer Fehlerbetriebsart beispielsweise durch den Chopper 430 in Wärme umgewandelt werden. Beim Betrieb des Choppers, d. h. wenn durch den Generator erzeugte elektrische Energie in Wärme umgewandelt wird, kommt es zwangsläufig zu einer erheblichen Erhöhung der Temperatur innerhalb des Gondelgehäuses 210. Diese Temperaturerhöhung kann sich nachteilig auf die Leistungselektronikeinheiten oder andere Komponenten im Inneren des Gondelgehäuses 210 auswirken. Um dies zu verhindern, ist mindestens ein temperaturabhängiger passiver Aktor 500 derart vorgesehen, dass er die Kühlklappe 220 an der Öffnung 211 in dem Gondelgehäuse 210 öffnen kann.

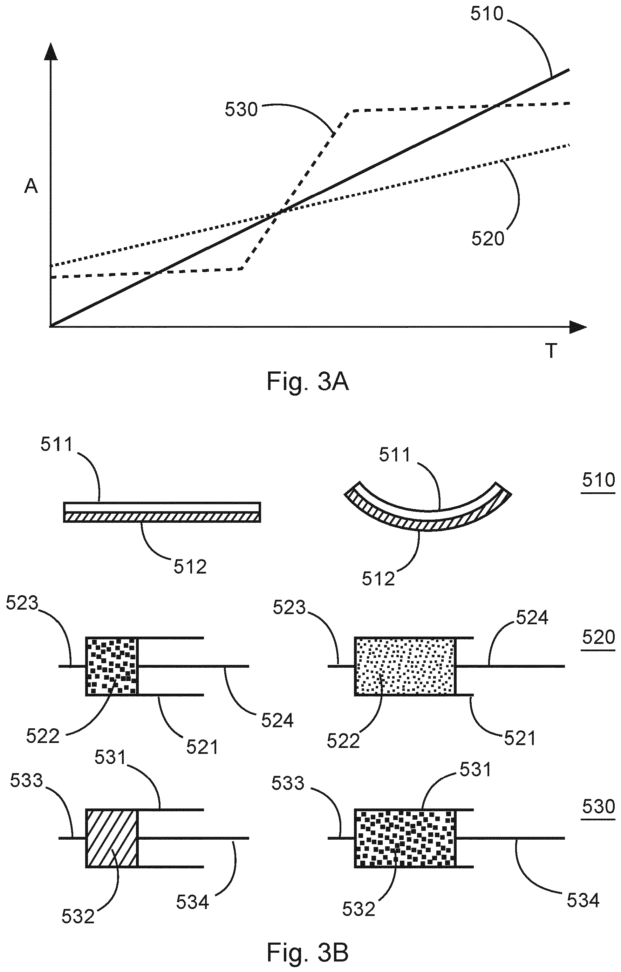

In Fig. 3A ist ein Graph zur Veranschaulichung der Ausdehnung von verschiedenen passiven Aktoren über die Temperatur gezeigt. Fig. 3B zeigt verschiedene Beispiele von den passiven Aktoren. In Fig. 3A ist die temperaturabhängige Ausdehnung eines Schmelzzylinders 530, eines Bi-Metall Aktors 510 und eines Ölzylinders 520 gezeigt. Der Bi-Metallaktor 510 sowie der Ölzylinderaktor 520 weisen jeweils einen linearen Zusammenhang zwischen steigender Temperatur und Ausdehnung auf. Lediglich bei dem Schmelzzylinderaktor 530 besteht kein linearer Zusammenhang. Vielmehr erfolgt bis zu einem Grenzwert keine nennenswerte Ausdehnung. Erst ab dem Grenzwert erfolgt mit steigender Temperatur eine Ausdehnung des Zylinders bis zu einem zweiten Grenzwert. Oberhalb des zweiten Grenzwertes kommt es auch bei steigender Temperatur nicht zu einer nennenswerten weiteren Ausdehnung.

Der passive temperaturabhängige Aktor 500 dient dazu, eine Öffnung 211 in einem Gondelgehäuse 210 temperaturabhängig zu öffnen. Der Aktor 500 kann als ein Bi-Metallaktor 510 ausgestaltet sein. Dazu weist der Bi-Metallaktor einen ersten und zweiten Metallabschnitt 511, 512 auf, welche aus unterschiedlichem Material hergestellt sind und unterschiedliche Wärmeausdehnungskoeffizienten aufweisen. Bei einer Temperaturerhöhung dehnen sich der erste und zweite Metallabschnitt 511, 512 unterschiedlich aus, was zu einer Formveränderung beispielsweise Biegung bzw. Krümmung des Bi-Metallaktors 510 führt.

Alternativ dazu kann der passive temperaturabhängige Aktor als Aktor mit einem Ölzylinder ausgestaltet sein. Der Ölzylinder 520 weist einen Zylinderabschnitt 521 und ein erstes und zweites Ende 523, 524 auf. Im Inneren des Zylinders 521 ist ein wärmeausdehnendes Material wie z. B. Öl 522 vorgesehen, welches sich bei Temperaturerhöhung ausdehnt, so dass eine Länge des Ölzylinders bei Temperaturerhöhung vergrößert wird. Dies ist in Fig. 3 dargestellt.

Ferner kann der passive temperaturabhängige Aktor als Schmelzzylinder 530 ausgestaltet sein. Der Schmelzzylinder 530 weist einen Zylinder 531 und ein erstes und zweites Ende 533, 534 auf. Ferner ist ein Schmelzmaterial 532 in dem Zylinder 531 vorgesehen. Bei zunehmender Temperatur schmilzt das Material 532, bis es sich in einem flüssigen Zustand befindet (s. rechtes Bild in Fig. 3B). Dies führt zu einer Ausdehnung des Materials 532 und somit zu einer Längenänderung des Schmelzzylinders.

Zur besseren und schnelleren Aktivierung des temperaturabhängigen passiven Aktors kann der Aktor zumindest teilweise Thermorippen aufweisen. Alternativ dazu kann der Aktor mit einer Heatpipe bzw. einem Wärmerohr gekoppelt sein, um eine Temperatur beispielsweise des Choppers verbessert an den temperaturabhängigen passiven Aktor weiterzuleiten, so dass eine Reaktion schnell erfolgen kann und die Kühlklappe der Öffnung geöffnet wird.

Damit ist auch eine schnelle Reaktion auf eine überhöhte Temperatur im Inneren des Gondelgehäuses und insbesondere im Bereich des Choppers möglich.

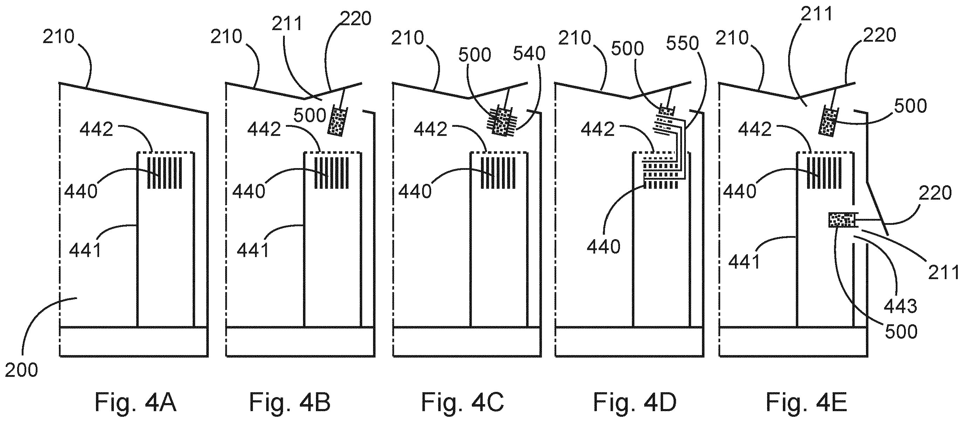

Fig. 4A bis 4F zeigen jeweils einen Ausschnitt einer Gondel einer Windenergieanlage. In Fig. 4A ist das Gondelgehäuse 210 mit einer Leistungselektronikeinheit 430 gezeigt, welche einen Chopper 430 aufweisen kann. Optional kann das Gondelgehäuse 210 gemäß Fig. 4A eine (nicht gezeigte) Öffnung für eine aktive Kühlung aufweisen. Die aktive Kühlung kann betrieben werden, wenn ausreichend Energie vorhanden ist.

In Fig. 4B ist ein Gondelgehäuse mit einer Leistungselektronikeinheit und einem Chopper gezeigt. Der Chopper 440 weist ein Choppergehäuse 441 optional mit mindestens einer Öffnung 442 auf. In dem Gehäuse 210 ist eine Öffnung 211 vorgesehen, welche durch eine Kühlklappe 220 verschließbar ist. Ferner ist ein temperaturabhängiger passiver Aktor 500 vorgesehen, welcher mit der Kühlklappe 220 gekoppelt ist und die Kühlklappe, wenn eine entsprechende Grenztemperatur überschritten wird, öffnet.

In Fig. 4C ist der Aufbau von Fig. 4B dargestellt, wobei der Aktor 510 eine Mehrzahl von Oberflächenvergrößerungen z. B. in Form von Rippen 510 aufweist.

Fig. 4D beruht auf der Ausgestaltung des Gondelgehäuses von Fig. 4B, wobei zwischen dem Chopper und dem passiven Aktor eine Heatpipe oder ein Wärmerohr 550 vorgesehen ist.

In Fig. 4E ist eine Situation wie in Fig. 4B gezeigt, wobei eine zusätzliche Öffnung 211 in dem Gondelgehäuse 210 mit einer zusätzlichen Kühlklappe 220 vorgesehen ist. Damit können mehrere Öffnungen mit mehreren Kühlklappen temperaturabhängig durch die temperaturabhängigen passiven Aktoren geöffnet werden.

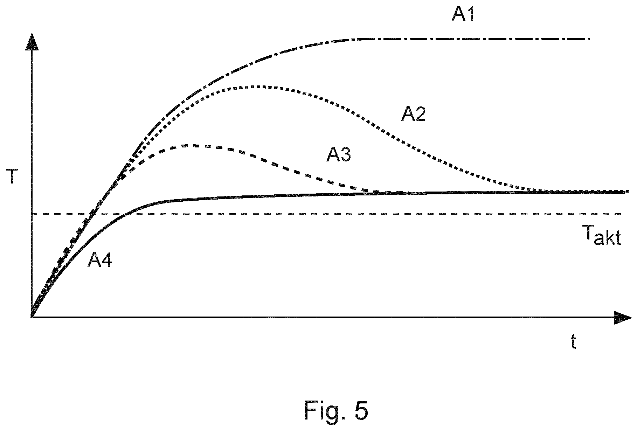

Fig. 5 zeigt einen Graphen zur Veranschaulichung einer zeitlichen Abhängigkeit einer Lufttemperatur in der Gondel für verschiedene Ausgestaltungen der Kühlung. Insbesondere ist der Fall ohne Kühlung A1 (s. Fig. 4A), ein Fall mit Öffnungen 211 in dem Gondelgehäuse 210 und einer mittels eines passiven Aktors 500 verschließbaren oder zu öffnenden Kühlklappe 200 vorgesehen A2 (s. Fig. 4B). Ferner ist eine gerippte Ausgestaltung des Aktors A3 sowie eine Ausgestaltung mit einer Heatpipe bzw. einem Wärmerohr dargestellt (s. Fig. 4C).

### Bezugszeichenliste

- 100: Windenergieanlage
- 102: Turm
- 106: Rotor
- 108: Rotorblätter
- 110: Spinner
- 200: Gondel
- 210: Gondelgehäuse
- 211: Öffnung
- 220: Kühlklappe
- 300: Generator
- 410: Leistungselektronikeinheiten
- 420: Leistungselektronikeinheiten
- 430: Leistungselektronikeinheiten
- 440: Chopper
- 441: Choppergehäuse
- 442: Öffnung
- 500: passiver Aktor
- 510: Bi-Metallaktor
- 511: erster Metallabschnitt
- 512: zweiter Metallabschnitt
- 520: Ölzylinder
- 521: Zylinderabschnitt
- 522: Öl
- 523: erstes Ende
- 524: zweites Ende
- 530: Schmelzzylinder
- 531: Zylinder
- 532: Schmelzmaterial
- 533: erstes Ende
- 534: zweites Ende
- 550: Wärmerohr

## Patentansprüche

1. Windenergieanlage (100), mit
einem Turm (102),
einer Gondel (200) mit einem Gondelgehäuse (210), welches auf dem Turm (102) platziert ist,
mindestens einer Kühlklappe (220), welche dazu ausgestaltet ist, eine Öffnung (211) in oder an einem zu kühlenden Bereich (200) der Windenergieanlage (100) zu verschließen,
mindestens einem temperaturabhängigen passiven Aktor (500), der dazu ausgestaltet ist, temperaturabhängig die Kühlklappe (220) zu betätigen und zu öffnen, um einen Wärmeausgleich in dem zu kühlenden Bereich (200) mittels der Öffnung (211) zu ermöglichen,
wobei der temperaturabhängige passive Aktor (500) ohne externe elektrische Energie in Abhängigkeit der Temperatur seine Form und/oder seine Länge ändert.

2. Windenergieanlage (100) nach Anspruch 1,
wobei der Bereich (200) der Windenergieanlage (100) als das Gondelgehäuse (210) mit mindestens einer Öffnung (211) ausgestaltet ist, welche mittels der Kühlklappe (220) verschließbar ist.

3. Windenergieanlage (100) nach Anspruch 1 oder 2, wobei
die Windenergieanlage (100) eine erste Betriebsart, nämlich eine Normalbetriebsart, und eine zweite Betriebsart, nämlich eine Fehlerbetriebsart, bei welcher die Windenergieanlage (100) nicht an ein Energieversorgungsnetz angeschlossen ist und/oder nicht genügend Energie zu einer aktiven Kühlung zugeführt wird oder bei der eine Temperatur in dem Bereich (200) der Windenergieanlage (100) einen Grenzwert überschreitet, aufweist,
wobei der temperaturabhängige passive Aktor (500) dazu ausgestaltet ist, in der Fehlerbetriebsart die mindestens eine Kühlklappe (220) temperaturabhängig zu öffnen, um den Wärmeausgleich in dem Bereich (200) der Windenergieanlage (100) zu ermöglichen.

4. Windenergieanlage (100) nach Anspruch 1 bis 3, wobei
das Gondelgehäuse (210) mindestens eine Wärmequelle in Form eines elektrischen Generators (300) und/oder einer Leistungselektronikeinheit (400) aufweist, wobei mindestens eine Leistungselektronikeinheit (400) in einer Fehlerbetriebsart eine Wärmemenge erzeugt, welche größer als ein Schwellwert ist,
wobei der passive temperaturabhängige Aktor (500) dazu ausgestaltet ist, die Kühlklappe (220) in Abhängigkeit der durch die Leistungselektronikeinheit (400) erzeugten Wärme zu öffnen.

5. Windenergieanlage (100) nach einem der Ansprüche 1 bis 4, wobei
der passive temperaturabhängige Aktor (500) als ein Bi-Metallaktor (510), als ein Ölzylinder (520) mit einer temperaturabhängigen Ausdehnung oder als ein Schmelzzylinder (530) mit einer temperaturabhängigen Ausdehnung ausgestaltet ist.

6. Windenergieanlage (100) nach einem der Ansprüche 1 bis 5, wobei
der passive temperaturabhängige Aktor (500) eine Oberflächenvergrößerung (540) an seiner Oberfläche zur Verbesserung eines Wärmeaustauschs aufweist.

7. Windenergieanlage (100) nach einem der Ansprüche 1 bis 6, ferner mit
einem Wärmerohr (550) zwischen einer Wärmequelle und dem passiven temperaturabhängigen Aktor (500).

8. Verfahren zum Steuern einer Windenergieanlage (100), wobei die Windenergieanlage einen Turm (102), eine Gondel (200) und einen Bereich mit einer Öffnung (211) und mindestens einer Kühlklappe (220) vzum Verschließen der Öffnung aufweist, wobei ein passiver temperaturabhängiger Aktor (500) an der Kühlklappe (220) vorgesehen ist, mit den Schritten:
temperaturabhängiges Aktivieren des passiven temperaturabhängigen Aktors (500), und
Öffnen der Kühlklappe (220) durch eine temperaturabhängige Längenausdehnung oder Formänderung des passiven temperaturabhängigen Aktors (500),
um einen Wärmeausgleich in dem Bereich (200) der Windenergieanlage (100) zu ermöglichen.

9. Verfahren nach Anspruch 8, wobei
der passive temperaturabhängige Aktor (500) in einer Fehlerbetriebsart aktivierbar ist, bei welcher die Windenergieanlage keine elektrische Energie an ein Energieversorgungsnetz abgeben oder von dem Energieversorgungsnetz beziehen kann.

## Claims

1. A wind turbine (100), with
a tower (102),
a nacelle (200) with a nacelle housing (210), which is placed on the tower (102),
at least one cooling flap (220), which is configured to close an opening (211) in or on an area (200) of the wind turbine (100) to be cooled,
at least one temperature-dependent actuator (500), which is configured to activate and open the cooling flap (220) as a function of temperature, so as to enable a heat compensation in the area (200) to be cooled by means of the opening (211),
wherein the temperature-dependent passive actuator (500) can change its shape and/or its length without external electrical energy as a function of the temperature.

2. The wind turbine (100) according to claim 1,
wherein the area (200) of the wind turbine (100) is configured as the nacelle housing (210) with at least one opening (211), which can be closed by means of the cooling flap (220).

3. The wind turbine (100) according to claim 1 or 2, wherein
the wind turbine (100) has a first operating mode, specifically a normal operating mode, and a second operating mode, specifically an error operating mode, in which the wind turbine (100) is not connected to the energy supply network and/or not enough energy is being supplied for active cooling, or in which a temperature exceeds a limit value in the area (200) of the wind turbine (100),
wherein the temperature-dependent passive actuator (500) is configured to open the at least one cooling flap (220) as a function of temperature in the error operating mode, so as to enable the heat compensation in the area (200) of the wind turbine (100).

4. The wind turbine (100) according to claim 1 to 3, wherein
the nacelle housing (210) has at least one heat source in the form of an electric generator (300) and/or a power electronics unit (400), wherein at least one power electronics unit (400) generates a quantity of heat that exceeds a threshold value in an error operating mode,
wherein the passive temperature-dependent actuator (500) is configured to open the cooling flap (220) as a function of the heat generated by the power electronic unit (400).

5. The wind turbine (100) according to claim 1 to 4, wherein
the passive temperature-dependent actuator (500) is configured as a bimetal actuator (510), as an oil cylinder (520) with a temperature-dependent expansion, or as a melting cylinder (530) with a temperature-dependent expansion.

6. The wind turbine (100) according to claim 1 to 5, wherein
the passive temperature-dependent actuator (500) has a surface enlargement (540) on its surface to improve a heat exchange.

7. The wind turbine (100) according to claim 1 to 6, further with
a heat pipe (550) between a heat source and the passive temperature-dependent actuator (500).

8. A method for controlling a wind turbine (100), wherein the wind turbine has a tower (102), a nacelle (200) and an area with an opening (211) and at least one cooling flap (220) for closing the opening, wherein a passive temperature-dependent actuator (500) is provided on the cooling flap (220), with the following steps:
temperature-dependent activation of the passive, temperature-dependent actuator (500), and
opening the cooling flap (220) via a temperature-dependent length expansion or change in shape of the passive temperature-dependent actuator (500),
so as to enable a heat compensation in the area (200) of the wind turbine (100).

9. The method according to claim 8, wherein
the passive temperature-dependent actuator (500) can be activated in an error operating mode, in which the wind turbine can no longer deliver any electrical energy to an energy supply network or draw any energy from the energy supply network.

## Revendications

1. Éolienne (100), avec
une tour (102),
une nacelle (200) avec un logement de nacelle (210), lequel est placé sur la tour (102),
au moins un volet de refroidissement (220), lequel est conçu pour fermer une ouverture (211) dans ou sur une zone (200) à refroidir de l'éolienne (100),
au moins un actionneur passif dépendant de la température (500), qui est conçu pour actionner et pour ouvrir le volet de refroidissement (220) en fonction de la température, pour
permettre un équilibrage thermique dans la zone (200) à refroidir au moyen de l'ouverture (211),
dans laquelle l'actionneur passif dépendant de la température (500) change de forme et/ou de longueur en fonction de la température sans énergie électrique externe.

2. Éolienne (100) selon la revendication 1,
dans laquelle la zone (200) de l'éolienne (100) est conçue en tant que logement de nacelle (210) avec au moins une ouverture (211), laquelle peut être fermée au moyen du volet de refroidissement (220).

3. Éolienne (100) selon la revendication 1 ou 2, dans laquelle
l'éolienne (100) présente un premier mode de fonctionnement, à savoir un mode de fonctionnement normal, et un deuxième mode de fonctionnement, à savoir un mode de fonctionnement défaillant, pour lequel l'éolienne (100) n'est pas raccordée à un réseau d'alimentation en énergie et/ou n'apporte pas suffisamment d'énergie à un refroidissement actif ou pour lequel une température dépasse une valeur limite dans la zone (200) de l'éolienne (100),
dans laquelle l'actionneur passif dépendant de la température (500) est conçu pour, dans le mode de fonctionnement défaillant, ouvrir l'au moins un volet de refroidissement (220) en fonction de la température afin de permettre l'équilibrage thermique dans la zone (200) de l'éolienne (100).

4. Éolienne (100) selon les revendications 1 à 3, dans laquelle
le logement de nacelle (210) présente au moins une source de chaleur sous la forme d'un générateur électrique (300) et/ou d'une unité électronique de puissance (400), dans laquelle au moins une unité électronique de puissance (400) génère, dans un mode de fonctionnement défaillant, une quantité de chaleur, laquelle est supérieure à une valeur seuil,
dans laquelle l'actionneur passif dépendant de la température (500) est conçu pour ouvrir le volet de refroidissement (220) en fonction de la chaleur générée par l'unité électronique de puissance (400).

5. Éolienne (100) selon l'une quelconque des revendications 1 à 4, dans laquelle l'actionneur passif dépendant de la température (500) est conçu en tant qu'actionneur bimétallique (510), en tant que cylindre à huile (520) avec une dilatation dépendante de la température ou en tant que cylindre à fusion (530) avec une dilatation dépendante de la température.

6. Éolienne (100) selon l'une quelconque des revendications 1 à 5, dans laquelle l'actionneur passif dépendant de la température (500) présente un agrandissement de surface (540) à sa surface pour améliorer un échange thermique.

7. Éolienne (100) selon l'une quelconque des revendications 1 à 6, en outre avec un caloduc (550) entre une source de chaleur et l'actionneur passif dépendant de la température (500).

8. Procédé de commande d'une éolienne (100), dans lequel l'éolienne présente une tour (102), une nacelle (200) et une zone avec une ouverture (211) et au moins un volet de refroidissement (220) pour fermer l'ouverture, dans lequel un actionneur passif dépendant de la température (500) est prévu sur le volet de refroidissement (220), avec les étapes :
d'activation, en fonction de la température, de l'actionneur passif dépendant de la température (500), et
d'ouverture du volet de refroidissement (220) par une dilatation longitudinale dépendante de la température ou un changement de forme de l'actionneur passif dépendant de la température (500),
pour permettre un équilibrage thermique dans la zone (200) de l'éolienne (100).

9. Procédé selon la revendication 8, dans lequel l'actionneur passif dépendant de la température (500) peut être activé dans un mode de fonctionnement défaillant dans lequel l'éolienne ne peut pas délivrer d'énergie électrique à un réseau d'alimentation électrique ou en retirer du réseau d'alimentation électrique.
